(19) Europäisches Patentamt / European Patent Office / Office européen des brevets

(11) **EP 3 335 011 B1**

(12) **EUROPÄISCHE PATENTSCHRIFT**

(45) Veröffentlichungstag und Bekanntmachung des Hinweises auf die Patenterteilung:
**25.03.2020 Patentblatt 2020/13**

(21) Anmeldenummer: **16750688.0**

(22) Anmeldetag: **29.07.2016**

(51) Int Cl.:
*G01D 5/20* *(2006.01)*    *G01D 5/243* *(2006.01)*
*G01V 3/08* *(2006.01)*

(86) Internationale Anmeldenummer:
**PCT/EP2016/068156**

(87) Internationale Veröffentlichungsnummer:
**WO 2017/025353 (16.02.2017 Gazette 2017/07)**

(54) **VORRICHTUNG ZUM MESSEN EINER MESSGRÖSSE**

DEVICE FOR MEASURING A VARIABLE

DIPOSITIF POUR MESURE D'UNE VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.08.2015 DE 102015215330**

(43) Veröffentlichungstag der Anmeldung:
**20.06.2018 Patentblatt 2018/25**

(73) Patentinhaber: **Continental Teves AG & Co. OHG 60488 Frankfurt am Main (DE)**

(72) Erfinder: **ACKER, Heinrich 65824 Schwalbach (DE)**

(56) Entgegenhaltungen:
WO-A1-2013/157979    DE-A1- 10 127 990
DE-A1- 19 710 591    GB-A- 665 630
GB-A- 2 257 528    US-A- 2 409 876

EP 3 335 011 B1

**Beschreibung**

Die Erfindung betrifft eine Vorrichtung zum Messen einer Messgröße. Insbesondere kann es sich dabei um einen induktiven Sensor handeln.

Das Dokument DE 197 10 591 beschreibt ein Messverfahren, das auf der Veränderung der induktiven Kopplung zweier Schwingkreise beruht.

Auch das Dokument US 2 409 876 zeigt eine Vorrichtung mit Schwingkreisen, deren induktive Kopplung der Messgröße entsprechend veränderbar ist.

Induktive Sensoren basieren typischerweise auf einer Änderung eines oder mehrerer Kennwerte eines Systems eines oder mehrerer induktiver Bauelemente durch eine Messgröße. Derartige induktive Bauelemente können beispielsweise Spule, Wicklung oder Induktivität genannt werden.

Als Kennwerte kommen insbesondere in Frage:

- Selbstinduktivität L, auch kurz Induktivität genannt,
- Verlustwiderstand R, der sich aus einem ohmschen Widerstand der Wicklung und anderen Verlustbeiträgen zusammensetzt,
- 

$$\text{komplexe Impedanz } Z = j\omega L + R \text{ mit der imaginären Einheit } j$$
$$\text{und der Kreisfrequenz } \omega,$$

- 

$$\text{Verlustwinkel } \delta = \arctan(Re\{Z\}/Im\{Z\}),$$

- sowie, insbesondere im Falle der magnetischen Kopplung zwischen mehreren Bauelementen, Gegeninduktivität M. Die Gegeninduktivität M kann u.a. als induzierte Spannung in einem Leiter als Reaktion auf einen bekannten Strom in einem anderen Leiter indirekt gemessen werden.

Messgrößen, die die Änderung der Kennwerte bewirken, können unter anderem Position bzw. Länge, Winkel, Kraft, Druck oder Drehmoment sein. Als Anwendung kann beispielhaft ein Positionssensor für das Bremspedal eines Automobils genannt werden.

Für induktive Sensoren existieren im Stand der Technik insbesondere zwei schaltungstechnische Hauptansätze, um eine elektrische Messung der Kennwerte vorzunehmen:
Zum einen ist dies ein resonantes System: Der induktive Sensor mit seinem variablen Kennwert, meist der Induktivität L, ist Teil des frequenzbestimmenden Netzwerks eines Oszillators. Der Oszillator schwingt stets mit seiner Eigenfrequenz, deren wichtigster Einflussfaktor L ist. Die Messung von L ist somit auf eine Frequenzmessung zurückgeführt, die z.B. durch Zählen der Perioden oder Nulldurchgänge der Oszillatorschwingung leicht vorgenommen werden kann.

Zum anderen ist dies ein Lock-in-Verstärker (auch phasenempfindlicher Gleichrichter, Synchrondemodulator oder Trägerfrequenzverstärker) : Der induktive Sensor erhält einen Stimulus mit einer festen Frequenz (Strom oder Spannung). Eine Signalverarbeitungsschaltung misst die jeweils andere elektrische Größe an der Impedanz (Spannung oder Strom). Die Signalverarbeitung entspricht einer schmalbandigen Filterung dieser Größe um die Frequenz des Stimulus mit anschließender Bestimmung der komplexen Amplitude und Quotientenbildung mit dem Stimulus zur Bestimmung des Kennwerts. Diese Funktionen können wahlweise mit analoger Elektronik oder weitgehend mit den Mitteln digitaler Signalverarbeitung und Software realisiert werden.

Beide Ansätze weisen unterschiedliche Nachteile auf.

Das resonante System weist Einschränkungen beim Entwurf des induktiven Systems auf, weil pro Oszillator nur eine Schwingung möglich ist. Mehrere Signale lassen sich nur mit mehreren unabhängigen Oszillatoren und induktiven Systemen gewinnen, wodurch sich der Aufwand für Sensoren mit ratiometrischer oder differentieller Messung deutlich erhöht. Darüber hinaus weist das induktive System stets Frequenzabhängigkeiten auf, d.h. es kann nur für eine Frequenz optimal ausgelegt werden; der Frequenzbereich des Oszillators ist immer ein Kompromiss. Über die Veränderung der Schwingungsfrequenz können Querempfindlichkeiten das Messergebnis verfälschen, weil beispielsweise die Induktivität L zusätzlich zur Empfindlichkeit auf die Messgröße von einer weiteren frequenzabhängigen Größe beeinflusst wird. Schließlich muss die Differenz des maximalen und des minimalen Zählergebnisses der Frequenzmessung einen Mindestwert überschreiten, damit die jeweiligen Anforderungen bezüglich Messgenauigkeit und -auflösung erreicht werden. Dafür ist je nach Frequenz eine minimale Messzeit erforderlich, die unter Umständen gar nicht zur Verfügung steht.

Der Lock-in-Verstärker hingegen arbeitet mit einer konstanten Frequenz, erfordert aber auch einen Stimulus mit dieser Frequenz. Die Frequenz dieser erzwungenen Schwingungen ist frei wählbar, aufgrund der Frequenzabhängigkeit des induktiven Systems stellt dies aber einen Widerspruch zum Betrieb in Resonanz, d.h. mit Schwingungen auf der Eigenfrequenz dar. Daher können die folgenden Vorteile der Resonanz nicht genutzt werden: Das induktive System, als Resonator betrieben, stellt bereits einen Filter dar, indem es in seiner Eigenfrequenz eine besonders hohe Amplitude erreichen kann, die die Messung erleichtert. Störungen, deren Frequenz deutlich von dieser Frequenz abweicht, werden durch die Filterwirkung unterdrückt. Darüber hinaus ist in Resonanz der Leistungsbedarf des induktiven Systems zur Aufrechterhaltung der Schwingung am geringsten, wenn alle anderen Parameter gleich bleiben. Bei gegebener Leistung des Stimulus ist somit eine besonders hohe Amplitude möglich. Diese beiden Vorteile stellen natürlich denselben Sachverhalt dar, einmal aus Sicht der Messung und einmal aus Sicht des Stimulus.

Es ist deshalb eine Aufgabe der Erfindung, eine im Vergleich zum Stand der Technik alternative, insbesondere verbesserte Vorrichtung zum Messen einer Messgröße zur Verfügung stellen.

Dies wird erfindungsgemäß durch eine Vorrichtung nach Anspruch 1 erreicht. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Die Erfindung betrifft eine Vorrichtung zum Messen einer Messgröße. Die Vorrichtung weist eine erste Induktivität auf. Sie weist eine Messinduktivität auf, welche zum Abfühlen der Messgröße ausgebildet ist und welche mit der ersten Induktivität gekoppelt ist. Sie weist ferner eine Kapazität auf, welche mit der ersten Induktivität zu einem Parallelschwingkreis verschaltet ist.

Die Vorrichtung weist eine Anregungsschaltung auf, welche dazu ausgebildet ist, den Parallelschwingkreis mit einer Anregungsfrequenz oszillierend anzuregen. Außerdem weist sie eine Messschaltung auf, welche zumindest mit der Messinduktivität zum Messen eines die Messgröße anzeigenden Werts verbunden ist.

Mittels der erfindungsgemäßen Vorrichtung kann die Messinduktivität in einem Schwingkreis vermessen werden. Dies spart Energie, da der Schwingkreis von sich aus schwingt und im Regelfall nur verlorene Energie nachgeführt wird. Es findet also eine erzwungene Schwingung statt. Diese erlaubt eine Nutzung der Vorteile der Resonanz und ist von den oben angesprochenen Beschränkungen eines resonanten Systems frei.

Die Anregungsschaltung und/oder die Messschaltung können beispielsweise als elektronische oder elektrische Komponenten, als Mikroprozessoren, Mikrokontroller, als Anwendungsspezifische Integrierte Schaltkreise oder in anderer Art ausgeführt sein.

Als die Messgröße anzeigender Wert kommen insbesondere in Frage:

- Selbstinduktivität L, auch kurz Induktivität genannt,
- Verlustwiderstand R, der sich aus einem ohmschen Widerstand der Wicklung und anderen Verlustbeiträgen zusammensetzt,
- komplexe Impedanz $Z = j\omega L + R$ mit der imaginären Einheit j und der Kreisfrequenz $\omega$,
- Verlustwinkel $\delta = \arctan(\mathrm{Re}\{Z\}/\mathrm{Im}\{Z\})$,
- sowie, insbesondere im Falle einer magnetischen Kopplung zwischen mehreren Bauelementen, Gegeninduktivität M. Die Gegeninduktivität M kann u.a. als induzierte Spannung in einem Leiter als Reaktion auf einen bekannten Strom in einem anderen Leiter indirekt gemessen werden.

Aus dem die Messgröße anzeigenden Wert kann typischerweise auf die Messgröße geschlossen werden, beispielswies kann die Messgröße berechnet oder in einer Tabelle nachgeschlagen werden.

Gemäß einer bevorzugten Ausführung ist vorgesehen, dass sich die Anregungsfrequenz um maximal 25 %, bevorzugt maximal 20 %, besonders bevorzugt maximal 15 %, noch weiter bevorzugt maximal 10 % von einer Resonanzfrequenz des Parallelschwingkreises unterscheidet. Damit wird eine vorteilhafte Anregung erreicht. Ein Betrieb bei Resonanzfrequenz ist typischerweise nicht beabsichtigt, kann jedoch als Grenzfall normalerweise toleriert werden.

Bevorzugt ist die Anregungsfrequenz einstellbar. Insbesondere kann sie durch ein Element mit variabler Frequenz gesteuert werden. Ein solches Element kann beispielsweise ein steuerbarer Oszillator sein. Die Anregungsfrequenz kann beispielsweise auch softwaremäßig einstellbar sein. Dies erlaubt eine Modulation der Anregungsfrequenz bzw. des Stimulus. Alternativ kann die Anregungsfrequenz auch fest vorgegeben sein.

Die Anregungsschaltung kann vorzugsweise dazu ausgebildet sein, die Anregungsfrequenz der Messschaltung zuzuführen. Damit kann die Anregungsfrequenz bei der Messschaltung zur besseren Rekonstruktion des gewünschten Signals verwendet werden.

Die Messschaltung kann insbesondere als Lock-In-Verstärker ausgebildet sein. Dieser kann auch als phasenempfindlicher Gleichrichter, Synchrondemodulator oder Trägerfrequenzverstärker bezeichnet werden und hat sich für die hier relevante Anwendung als vorteilhaft erwiesen.

Die erste Induktivität, die Messinduktivität und/oder die Kapazität sind bevorzugt Bauteile mit einer jeweiligen Toleranz zwischen 1 % und 10 %, bevorzugt von 1 %, oder von weniger als 1 %. Die Toleranz gibt dabei typischerweise die bauartbedingte maximale Abweichung zu einem Sollwert vor. Entsprechend geringe Toleranzen erleichtern vorliegend die Konzeption der Vorrichtung insbesondere im Kontext einer Massenfertigung, da bei einer geringen Toleranz auch die maximale Abweichung der Resonanzfrequenz des Parallelschwingkreises entsprechend gering ist. Gemäß einer Ausführung ist die Messinduktivität galvanisch mit der ersten Induktivität gekoppelt. Gemäß einer weiteren Ausführung ist die Messinduktivität magnetisch mit der ersten Induktivität gekoppelt. Die Messinduktivität kann insbesondere mit der ersten Induktivität durch Ausbildung als Messtransformator gekoppelt sein. Derartige Ausführungen haben sich für typische Anwendungen als vorteilhaft erwiesen.

Gemäß der Erfindung ist vorgesehen, dass

- der Parallelschwingkreis eine optimale Güte aufweist, welche durch Maximierung eines Werts von $Vt * Vt / V0$ erhalten wird,
- wobei Vt ein Verhältnis aus Spulenstrom und Zuleitungsstrom bei maximaler Abweichung der Kapazität und der ersten Induktivität von ihren jeweiligen Werten bei der Resonanzfrequenz des Parallelschwingkreises bezeichnet, und
- wobei V0 ein Verhältnis aus Spulenstrom und Zuleitungsstrom bei jeweiligen Werten von Kapazität und erster Induktivität bei der Resonanzfrequenz des Parallelschwingkreises bezeichnet.

Die optimale Güte kann insbesondere durch Verschalten eines Widerstands im Parallelschwingkreis begrenzt werden.

Die maximale Abweichung wird typischerweise durch die Toleranz, also die weiter oben bereits erwähnte maximale Abweichung zum Sollwert, das heißt Nominalwert, des jeweiligen Bauteils vorgegeben.

Zur Güte und zur eben erwähnten vorteilhaften Ausführung werden nachfolgend einige Ausführungen gegeben.

Passive Bauelemente der Elektrotechnik, wie z.B. Spulen und Kondensatoren, werden üblicherweise mit Toleranzen ihrer Kennwerte angeboten, die typischerweise zwischen 1 % und 10 % liegen. Noch niedrigere Werte als 1 % führen meist zu sehr hohen Kosten für die Bauelemente. Toleranzen von mehr als 10 % machen es demgegenüber schwierig, Schaltungen überhaupt sinnvoll auszulegen. Wird ein Schwingkreis aus toleranzbehafteten Bauelementen mit den Kennwerten L und C (Kapazität) aufgebaut, so ergibt sich aus der Schwingungsformel für die Resonanzfrequenz $\omega_0 = 1/\sqrt{(LC)}$, dass die Toleranz der Resonanzfrequenz $\omega_0$ dem geometrischen Mittel $\sqrt{(LC)}$ der Toleranzen der Bauelemente entspricht. Die Toleranz der Resonanzfrequenz von Schwingkreisen, die mit den üblichen Bauelementen aufgebaut sind, bewegt sich daher ebenfalls im Bereich von 1 % bis 10 %. Wird ein Schwingkreis so ausgelegt, dass seine nominale Resonanzfrequenz mit der Frequenz des Stimulus, also der Anregungsfrequenz übereinstimmt, muss man davon ausgehen, dass die reale Resonanzfrequenz um $\pm$ 1 % bis $\pm$ 10 % abweicht.

Eine wichtige Eigenschaft von Schwingkreisen ist ihre Güte Q. Sie ist ein Maß für die Verluste, die durch den ohmschen Widerstand im Kreis auftreten und für das Abklingen einer freien Schwingung. Je höher die Güte, desto geringer die Verluste und desto langsamer das Abklingen.

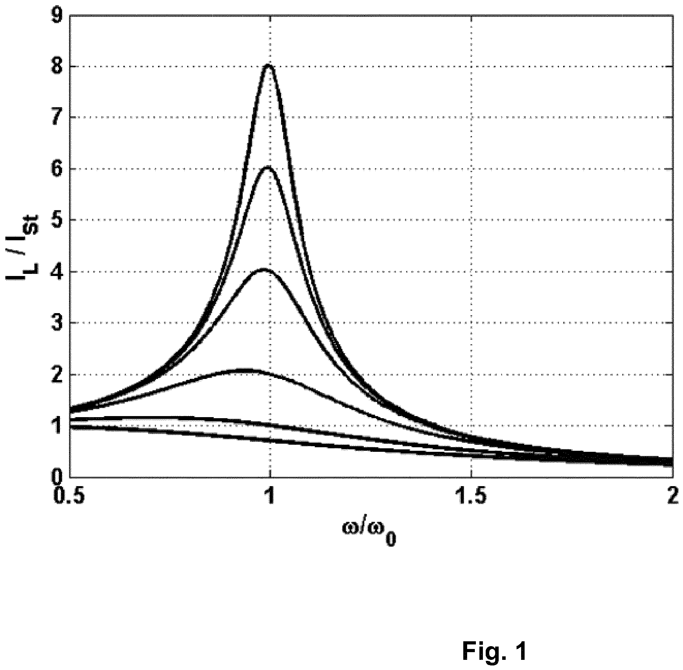

Figur 1 zeigt eine Kurvenschar, die die Auswirkung der Güte auf den Nutzen der Ergänzung des induktiven Systems zum Schwingkreis in Bezug auf den Stimulus, also die Anregung durch die Anregungsschaltung zeigt. Aufgetragen ist das Verhältnis des Stromes $I_L$ durch die angeregte Induktivität zum Strom $I_{St}$ des Stimulus. Ohne Ergänzung des induktiven Systems zum Schwingkreis wäre dieses Verhältnis immer gleich eins, weil es keinen weiteren Strompfad gibt. Da der Strom $I_L$ dem Nutzstrom entspricht, weil durch ihn der magnetische Fluss erzeugt wird, während der Strom $I_{St}$ dem Aufwand entspricht, bedeutet der aufgetragene Quotient einen Bewertungsfaktor für den Nutzen. Werte größer eins entsprechen einem Gewinn. Dieser Nutzen ist über die auf die Resonanzkreisfrequenz $\omega_0$ normierte Kreisfrequenz $\omega$ aufgetragen. Der Scharparameter ist die Güte; der Wert bei $\omega_0$ in jeder Kurve entspricht dabei dem Wert der Güte, d.h. die Kurven stellen die Güte Q mit den Werten 8; 6; 4; 2; 1; $1/\sqrt{2}$ (von oben nach unten) dar.

Betrachtet man nun den Nutzen der Ergänzung des induktiven Systems zum Schwingkreis bei Frequenzen, die um beispielsweise $\pm$ 10 % von der Resonanzkreisfrequenz $\omega_0$ abweichen, so stellt man fest, dass sich auch für diese Frequenzen ein hoher Nutzen einstellen kann, nicht nur bei der Nominalfrequenz. Je höher die Güte, desto höher ist jedoch das Verhältnis aus dem Nutzen bei der Resonanzkreisfrequenz $\omega_0$ und dem Nutzen bei einer Frequenz, die um $\pm$ 10 % abweicht. Grund ist der bekannte Zusammenhang, dass die Bandbreite der Resonanzüberhöhung bei zunehmender Güte immer schmaler wird. Für die Auslegung der hierin beschriebenen Vorrichtung besteht daher folgender Zielkonflikt: Einerseits sollte die Güte für einen möglichst hohen gütebedingten Nutzen möglichst hoch sein; andererseits bewirkt ein hohes Verhältnis des Nutzens in der Mitte (Resonanz) und an den Rändern des Toleranzbereichs eine Reduzierung der Nutzbarkeit, die sich folgendermaßen erklärt: Jedes übliche Messsystem, ob analog oder digital, hat eine maximale Eingangsamplitude, die typischerweise nicht überschritten werden darf. Im Rahmen dieses Maximums ist die relative Auflösung zum Eingangssignal proportional, weil der kleinste unterscheidbare Schritt des Eingangssignals im Eingangssignalbereich konstant ist. Wird nun der Eingangssignalbereich bei Resonanz voll ausgeschöpft, so ist der sich aus Figur 1 ergebende Nutzen auch voll nutzbar. An den Rändern des Toleranzbereiches jedoch ist der Nutzen reduziert um den Faktor, der sich aus dem Verhältnis des Nutzens in der Mitte (Resonanz) und an den Rändern des Toleranzbereichs ergibt.

Ziel ist eine optimale Auslegung des Sensorsystems im Rahmen des Entwurfs. Zunächst ist anzustreben, die Toleranz der Bauelementkennwerte L und C, bzw. ihr geometrisches Mittel $\sqrt{(LC)}$, möglichst gering zu halten. Dabei ist hilfreich, dass in den letzten Jahren Kondensatoren mit Toleranzen von 1 % und besser verfügbar und billiger geworden sind. Die hauptsächliche Bedeutung für die Optimierung kommt aber der optimalen Wahl der Güte zu. Generell lassen sich hohe Gütewerte nur in Kombination mit geringen Toleranzen des Terms $\sqrt{(LC)}$ vorteilhaft nutzen. Das im Folgenden beschriebene Auslegungsverfahren basiert daher auf dem Gedanken, aufgrund der Verfügbarkeit geeigneter, eng tolerierter Kondensatoren und des Entwurfs eines induktiven Systems für die jeweilige Anwendung eine Toleranz für $\sqrt{(LC)}$ festzulegen, aus der dann die optimale Güte berechnet werden kann.

Mit der Toleranz von $\sqrt{(LC)}$ ist auch die Toleranz der Kreisfrequenz $\omega$ durch die Schwingungsformel festgelegt. Aus Figur 1 kann nun der Wert für $I_L/I_{St}$ abgelesen werden für $\omega_0$ (Resonanz) und $\omega_T$ (Kreisfrequenz gegeben durch die Toleranz; es kann die untere Frequenzgrenze gewählt werden, die obere oder beide). Dies kann auch numerisch geschehen; die Berechnung von Fig. 1 aus dem Zuleitungsstrom $I_{St}$ und dem Spulenstrom $I_L$ für einen Parallelschwingkreis gegebener Güte ist elementare Elektrotechnik und wird hier vorausgesetzt. Dadurch sind die Größen $V0 = I_L(\omega_0)/I_{St}(\omega_0)$ und $Vt = I_L(\omega_T)/I_{St}(\omega_T)$ nun bekannt. Für eine Frequenz $\omega_T$ gilt dann: Der Bruchteil, mit dem der Eingangsspannungsbereich des Messsystems ausgeschöpft wird, ist durch den Term Vt/V0 gegeben. Bei dieser Frequenz ist der Nutzen, der durch die Ergänzung des induktiven Signals zum Schwingkreis erhalten wird, gleich Vt. Somit beträgt der Faktor, mit dem das ganze System von der Ergänzung des induktiven Signals zum Schwingkreis profitiert, das Produkt beider Terme: $Vt^2/V0$. Durch elementare Umformungen der zugrundeliegenden Gleichungen kann dieser Faktor berechnet werden als Funktion von $\omega_0$, $\omega_T$ und Q. Die Optimierung eines Systems besteht dann darin, $Vt^2/V0$ zu maximieren, wodurch sich ein Ergebnis für Q in Abhängigkeit von $\omega_0$ und $\omega_T$ ergibt. Durch weitere elementare mathematische Umformungen lässt sich auch Q in Abhängigkeit von $\omega_0$ und $\omega_T$ auftragen. Aus einer solchen Darstellung lässt sich Q direkt ablesen, man spart sich so das wiederholte Einsetzen von Werten für Q in die Berechnung zur Maximumsuche. In beiden Fällen sind die Ergebnisse für Q stets maximale Werte, d.h. für ein entsprechend ausgelegtes System mit $\omega_0$ und $\omega_T$ soll Q die berechneten Werte nie überschreiten, weil sonst der zugrunde gelegte Eingangssignalbereich des Messsystems verletzt wird. Bei einer Unterschreitung des berechneten Wertes von Q tritt keine Verletzung auf; der Eingangssignalbereich des Messsystems wird lediglich nicht ausgeschöpft. Dies ist wichtig für die Auslegung des Schwingkreises, da eine zu hohe Güte Q stets in einfacher Weise durch Hinzufügen eines ohmschen Widerstandes herabgesetzt werden kann; es bereitet jedoch u.U. große Schwierigkeiten, eine niedrige durch die Eigenschaften des induktiven Systems gegebene Güte Q konstruktiv zu erhöhen. Ursache ist der parasitäre Charakter des Verlustwiderstandes in induktiven Bauelementen, der insbesondere in Sensorinduktivitäten oft hoch ist, weil ihre Windungen ausgedehnt und die magnetischen Kreise offen sind.

Es ergibt sich insgesamt folgende vorteilhafte Vorgehensweise bzw. folgendes Verfahren, zusammengefasst aus den obenstehenden Erläuterungen:

1. Auslegung des induktiven Systems (weitgehend außerhalb des Themas dieser Anmeldung)
2. Festlegung der Arbeitsfrequenz des induktiven Systems (weitgehend außerhalb des Themas dieser Anmeldung, da von der Auslegung bestimmt)
3. Auswahl eines Kondensators mit möglichst geringer Toleranz (dies kann insbesondere nach kommerziellen Kriterien erfolgen)
4. Berechnung des geometrischen Mittels der Toleranz der Bauelementwerte L und C
5. Bestimmung der Frequenz $\omega_T$ aus (4.)
6. Wiederholte Berechnung und Maximierung von $Vt^2/V0$; Ergebnis ist die maximal zulässige Güte Q mit den gewählten Parametern
7. Ist die Güte des Schwingkreises aus L, C und seinem konstruktiv bedingten Verlustwiderstand kleiner als die maximal zulässige Güte Q? Wenn ja, fertig.
8. Wenn nein, Einfügen eines Widerstandes in den Schwingkreis, der die Güte auf den maximal zulässigen Wert herabsetzt.

Es sei verstanden, dass die eben beschriebenen Verfahrensschritte als Ganzes oder in beliebiger Unterkombination einen eigenständigen Erfindungsaspekt darstellen können.

Aus diesen Ausführungen leitet sich insbesondere die oben beschriebene Vorgehensweise bei der Bestimmung der Güte ab.

Die Messgröße kann beispielsweise durch Verändern einer Position eines magnetischen Kerns in der Messinduktivität abgefühlt werden. Dies kann den Wert der Induktivität der Messinduktivität ändern.

Die Messgröße kann auch durch Verändern eines Abstands zwischen Messinduktivität und erster Induktivität abgefühlt werden. Dies entspricht typischerweise einer Ausführung als Messtransformator, wobei die magnetische Kopplung verändert wird.

Außerdem kann die Messgröße beispielsweise durch Verändern einer Position eines magnetischen und leitfähigen, eines unmagnetischen und leitfähigen, oder eines magnetischen und nicht leitfähigen Elements benachbart zu Messinduktivität und erster Induktivität abgefühlt werden. Dies erlaubt eine Anpassung an unterschiedliche Aufgaben und Gegebenheiten. Das Element kann beispielsweise zwischen oder auch neben erster Induktivität und Messinduktivität angeordnet sein. Durch das Verändern seiner Position wird die Kopplung zwischen erster Induktivität und Messinduktivität verändert.

Ein magnetisches und leitfähiges Element kann beispielsweise aus Stahl sein. Ein unmagnetisches und leitfähiges Element kann beispielsweise aus Aluminium sein. Ein magnetisches und nicht leitfähiges Element kann beispielsweise aus Ferrit sein.

Die Messinduktivität kann insbesondere dazu ausgebildet sein, eine Messgröße in Form einer Position, einer Länge, eines Winkels, einer Kraft, eines Drucks und/oder eines Drehmoments abzufühlen. Dies entspricht typischen Einsatzszenarien.

Die Messschaltung ist vorzugsweise dazu ausgebildet, einen oder mehrere der folgenden Kennwerte über der Messinduktivität zu messen:

- Selbstinduktivität bzw. Induktivität,
- Verlustwiderstand,
- komplexe Impedanz,
- Verlustwinkel,
- Gegeninduktivität zur ersten Induktivität.

Aus solchen Kennwerten kann typischerweise auf die Messgröße geschlossen werden.

Gemäß einer Weiterbildung ist vorgesehen, dass die Vorrichtung zwei, drei oder mehr als drei Messinduktivitäten aufweist. Diese können beispielsweise einzeln oder auch zusammen bewegbar ausgebildet sein. Sie können insbesondere von der gleichen Messgröße beeinflusst werden, so dass eine Kompensation von Störgrößen, insbesondere der Temperatur, möglich ist.

Insbesondere kann die Vorrichtung eine erste Messinduktivität und eine zweite Messinduktivität aufweisen, wobei die erste Messinduktivität an einem ersten Längsende der ersten Induktivität angeordnet ist und die zweite Messinduktivität an einem zweiten Längsende der ersten Induktivität angeordnet ist. Eine solche Ausführung hat sich für typische Anwendungen als vorteilhaft erwiesen.

Die erfindungsgemäße Vorrichtung kann beispielsweise einen Oszillator, einen optionalen Verstärker, ein induktives System, einen Schwingkreiskondensator, einem optionalen Messverstärker und ein Messsystem, insbesondere die Messvorrichtung aufweisen. Der Verstärker verstärkt das Signal des Oszillators, er kann insbesondere entfallen, wenn der Ausgang des Oszillators bereits ein hinreichend starkes Signal bereitstellt. Dieses Signal oder das des Verstärkers bilden den Stimulus für das induktive System, welches durch den Kondensator zum Schwingkreis ergänzt wird. Insbesondere können die weiter oben bereits erwähnte erste Induktivität und die ebenfalls bereits erwähnte Messinduktivität als induktives System angesehen werden. Falls das Ausgangssignal zu schwach für das Messsystem ist, kann ein zusätzlicher Messverstärker verwendet werden, andernfalls kann insbesondere das Messsystem direkt mit dem induktiven System verbunden werden, beispielsweise indem eine elektrische Größe oder mehrere elektrische Größen am induktiven System abgegriffen wird oder werden. Das Messsystem kann beispielsweise als in analoger oder digitaler Technik und ggf. Software implementierter Lock-in-Verstärker (bzw. phasenempfindlicher Gleichrichter, Synchrondemodulator oder Trägerfrequenzverstärker) ausgeführt sein und kann unter Zuhilfenahme des Oszillatorsignals als Referenzsignal einen oder mehrere Kennwerte des induktiven Systems ermitteln.

Durch die beschriebene Auslegung eines induktiven Systems und einer Kombination aus den hierin beschriebenen Komponenten wird erreicht, dass die Überhöhung der für die Messung maßgeblichen Größen, wie sie für Resonanz charakteristisch ist, in Verbindung mit einem Signalverarbeitungsweg, wie er vom Lock-in-Verstärker bekannt ist, verbunden werden kann. Dadurch wird der Strombedarf eines induktiven Sensorsystems verringert und/oder seine Messauflösung wird erhöht. Für die praktische Auslegung von induktiven Sensorsystemen mit offenen magnetischen Kreisen können für $Vt^2/V0$ vorteilhaft typische Werte im Bereich von 3 bis 8 verwendet bzw. erwartet werden.

Weitere Merkmale und Vorteile wird der Fachmann aus dem nachfolgend mit Bezug auf die beigefügte Zeichnung beschriebenen Ausführungsbeispiel entnehmen.

Figur 1 zeigt beispielhafte Verläufe einer Güte, auf welche bereits weiter oben in dieser Anmeldung eingegangen wurde.

Figur 2 zeigt ein Ausführungsbeispiel einer erfindungsgemäßen Vorrichtung.

Figur 1 wurde bereits weiter oben im Text erwähnt und erläutert.

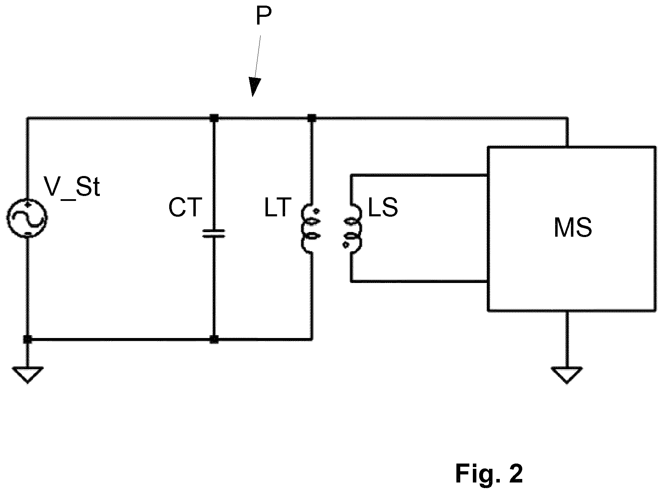

Figur 2 zeigt ein Ausführungsbeispiel einer erfindungsgemäßen Vorrichtung zum Messen einer Messgröße, bei welcher ein induktives System als Messtransformator aus einer ersten Induktivität LT und einer Messinduktivität LS ausgeführt ist.

Die erste Induktivität LT ist mit einer Kapazität CT zu einem Parallelschwingkreis P verschaltet.

Vorliegend ist die Auslegung der Vorrichtung dergestalt, dass auf die Verwendung eines Verstärkers verzichtet werden kann. Auch ist es vorliegend nicht erforderlich, zur Reduktion der Güte Q des Parallelschwingkreises P einen zusätzlichen ohmschen Widerstand einzufügen, weil der parasitäre Widerstand der ersten Induktivität LT ausreicht, um die Güte Q im zulässigen Bereich zu halten.

Zum Anregen des Parallelschwingkreises P ist eine Anregungsschaltung in Form einer Spannungsquelle V_St vorgesehen, die einen Oszillator enthält. V_St schwingt daher mit einer Anregungsfrequenz bzw. einer Arbeitsfrequenz und einer festen Amplitude. Der Strom durch die Spannungsquelle V_St ist der eigentliche Stimulus des Parallelschwingkreises P. Der Wert dieses Stroms hängt von der Impedanz des angeschlossenen Parallelschwingkreises P aus der Kapazität CT und der ersten Induktivität LT ab. Bei hoher Güte dieses Schwingkreises ist der Strom durch die erste Induktivität LT viel höher als der Strom durch die Spannungsquelle V_St.

Durch den Strom, welcher durch die erste Induktivität LT fließt, wird ein magnetischer Fluss erzeugt, der auch die Messinduktivität LS erfasst.

Der Prozentsatz des magnetischen Flusses der ersten Induktivität LT, der auch durch die Messinduktivität LS geht, hängt dabei von einer Messgröße ab. Beispielsweise kann sich der Abstand der ersten Induktivität LT zur Messinduktivität LS ändern, um diesen zu messen. Es kann sich aber auch beispielsweise ein weichmagnetischer Kern oder ein elektrisch leitfähiger Körper zwischen der ersten Induktivität LT und der Messinduktivität LS befinden, dessen Bewegung gemessen wird.

Es sei erwähnt dass jegliche Anordnung, die eine Parameteränderung des induktiven Systems bewirkt, grundsätzlich verwendet werden kann.

Typischerweise induziert der magnetische Fluss in der Messinduktivität LS eine Spannung, die einem Messsystem MS zugeleitet wird. Da das Messsystem MS ebenfalls an die Spannungsquelle V_St angeschlossen ist, kann es, als Lock-in-Verstärker ausgeführt, die induzierte Spannung nach Betrag und Phase messen und dabei eine schmalbandige Filterung um die Anregungsfrequenz erreichen.

Durch Hinzufügen weiterer Messinduktivitäten LS und Anschließen an weitere Eingänge des Messsystems MS können mehrere unabhängige Signale mit demselben Stimulus, also der gleichen Anregungsfrequenz versorgt werden.

## Patentansprüche

1. Vorrichtung zum Messen einer Messgröße, aufweisend

   - eine erste Induktivität (LT),
   - eine Messinduktivität (LS), welche zum Abfühlen der Messgröße ausgebildet ist und welche mit der ersten Induktivität (LT) gekoppelt ist,
   - eine Kapazität (CT), welche mit der erste Induktivität (LT) zu einem Parallelschwingkreis (P) verschaltet ist, wobei die erste Induktivität (LT) und die Kapazität (CT)jeweils eine vorgegebene Toleranz aufweisen und damit eine vom jeweiligen Nominalwert maximal zu erwartende Abweichung aufweisen,
   - eine Anregungsschaltung (V_St), welche dazu ausgebildet ist, den Parallelschwingkreis (P) mit einer Anregungsfrequenz oszillierend anzuregen, und
   - eine Messschaltung (MS), welche zumindest mit der Messinduktivität (LS) zum Messen eines die Messgröße anzeigenden Werts verbunden ist, **dadurch gekennzeichnet, dass** der Parallelschwingkreis (P) eine optimale Güte aufweist, welche durch Maximierung eines Werts von Vt * Vt / V0 erhalten wird,
   - wobei Vt ein Verhältnis aus Spulenstrom und Zuleitungsstrom bei der maximal zu erwartenden Abweichung der Kapazität (CT) und der ersten Induktivität (LT) von ihren jeweiligen Nominalwerten bei der Resonanzfrequenz des Parallelschwingkreises (P) bezeichnet, und
   - wobei V0 ein Verhältnis aus Spulenstrom und Zuleitungsstrom bei jeweiligen Werten von Kapazität (CT) und erster Induktivität (LT) bei der tatsächlich gegebenen Resonanzfrequenz des Parallelschwingkreises (P) bezeichnet.

2. Vorrichtung nach Anspruch 1,

**dadurch gekennzeichnet, dass**

- die Anregungsfrequenz sich um maximal 25 %, bevorzugt maximal 20 %, besonders bevorzugt maximal 15 %, noch weiter bevorzugt maximal 10 % von einer Resonanzfrequenz des Parallelschwingkreises (P) unterscheidet.

3. Vorrichtung nach einem der vorhergehenden Ansprüche,
**dadurch gekennzeichnet, dass**

- die Anregungsfrequenz einstellbar ist, insbesondere durch ein Element mit variabler Frequenz gesteuert wird.

4. Vorrichtung nach einem der vorhergehenden Ansprüche,
**dadurch gekennzeichnet, dass**

- die Anregungsschaltung (V_St) dazu ausgebildet ist, die Anregungsfrequenz der Messschaltung (MS) zuzuführen.

5. Vorrichtung nach einem der vorhergehenden Ansprüche,
**dadurch gekennzeichnet, dass**

- die Messschaltung (MS) als Lock-In-Verstärker ausgebildet ist.

6. Vorrichtung nach einem der vorhergehenden Ansprüche,
**dadurch gekennzeichnet, dass**

- die erste Induktivität (LT), die Messinduktivität (LS) und/oder die Kapazität (CT) Bauteile mit einer jeweiligen Toleranz zwischen 1 % und 10 %, bevorzugt von 1 %, oder von weniger als 1 % sind.

7. Vorrichtung nach einem der vorhergehenden Ansprüche,
**dadurch gekennzeichnet, dass**

- die Messinduktivität (LS) galvanisch mit der ersten Induktivität (LT) gekoppelt ist.

8. Vorrichtung nach einem der vorhergehenden Ansprüche,
**dadurch gekennzeichnet, dass**

- die Messinduktivität (LS) magnetisch mit der ersten Induktivität (LT) gekoppelt ist.

9. Vorrichtung nach einem der vorhergehenden Ansprüche,
**dadurch gekennzeichnet, dass**

- die optimale Güte durch Verschalten eines Widerstands im Parallelschwingkreis (P) begrenzt wird.

10. Vorrichtung nach einem der vorhergehenden Ansprüche,
**dadurch gekennzeichnet, dass** die Messgröße

- durch Verändern einer Position eines magnetischen Kerns in der Messinduktivität (LS),
- durch Verändern eines Abstands zwischen Messinduktivität (LS) und erste Induktivität (LT), und/oder
- durch Verändern einer Position eines

    - magnetischen und leitfähigen,
    - unmagnetischen und leitfähigen, oder
    - magnetischen und nicht leitfähigen

Elements benachbart zu Messinduktivität (LS) und erster Induktivität (LT) abgefühlt wird.

11. Vorrichtung nach einem der vorhergehenden Ansprüche,
**dadurch gekennzeichnet, dass**

- die Messinduktivität (LS) dazu ausgebildet ist, eine Messgröße in Form einer Position, einer Länge, eines Winkels, einer Kraft, eines Drucks und/oder eines Drehmoments abzufühlen.

**12.** Vorrichtung nach einem der vorhergehenden Ansprüche,
**dadurch gekennzeichnet, dass**

- die Messschaltung (MS) dazu ausgebildet ist, einen oder mehrere der folgenden Kennwerte über der Messinduktivität (LS) zu messen:
- Selbstinduktivität bzw. Induktivität,
- Verlustwiderstand,
- komplexe Impedanz,
- Verlustwinkel
- Gegeninduktivität zur ersten Induktivität.

**13.** Vorrichtung nach einem der vorhergehenden Ansprüche,
**dadurch gekennzeichnet, dass**

- die Vorrichtung zwei, drei oder mehr als drei Messinduktivitäten (LS) aufweist.

**14.** Vorrichtung nach einem der vorhergehenden Ansprüche,
**dadurch gekennzeichnet, dass**

- die Vorrichtung eine erste Messinduktivität (LS) und eine zweite Messinduktivität (LS) aufweist, wobei die erste Messinduktivität (LS) an einem ersten Längsende der ersten Induktivität (LT) angeordnet ist und die zweite Messinduktivität (LS) an einem zweiten Längsende der ersten Induktivität (LT) angeordnet ist.

**Claims**

**1.** Apparatus for measuring a measurement variable, having

- a first inductance (LT),
- a measuring inductance (LS) which is designed to sense the measurement variable and is coupled to the first inductance (LT),
- a capacitance (CT) which is connected to the first inductance (LT) to form a parallel resonant circuit (P), wherein the first inductance (LT) and the capacitance (CT) each have a predefined tolerance and therefore have a maximum expected deviation from the respective nominal value,
- an excitation circuit (V_St) which is designed to excite the parallel resonant circuit (P) in an oscillating manner at an excitation frequency, and
- a measuring circuit (MS) which is connected at least to the measuring inductance (LS) for measuring a value indicating the measurement variable, **characterized in that** the parallel resonant circuit (P) has an optimum Q factor which is obtained by maximizing a value of Vt * Vt / V0,
- wherein Vt denotes a ratio of the coil current and supply line current in the case of the maximum expected deviation of the capacitance (CT) and of the first inductance (LT) from their respective nominal values at the resonant frequency of the parallel resonant circuit (P), and
- wherein V0 denotes a ratio of the coil current and supply line current in the case of respective values of the capacitance (CT) and first inductance (LT) at the actually given resonant frequency of the parallel resonant circuit (P).

**2.** Apparatus according to Claim 1,
**characterized in that**

- the excitation frequency differs by at most 25%, preferably at most 20%, particularly preferably at most 15%, even more preferably at most 10%, from a resonant frequency of the parallel resonant circuit (P) .

**3.** Apparatus according to one of the preceding claims,
**characterized in that**

- the excitation frequency is adjustable, in particular is controlled by means of a variable-frequency element.

4. Apparatus according to one of the preceding claims,
**characterized in that**

- the excitation circuit (V_St) is designed to supply the excitation frequency to the measuring circuit (MS) .

5. Apparatus according to one of the preceding claims,
**characterized in that**

- the measuring circuit (MS) is in the form of a lock-in amplifier.

6. Apparatus according to one of the preceding claims,
**characterized in that**

- the first inductance (LT), the measuring inductance (LS) and/or the capacitance (CT) are components having a respective tolerance between 1% and 10%, preferably 1%, or less than 1%.

7. Apparatus according to one of the preceding claims,
**characterized in that**

- the measuring inductance (LS) is electrically coupled to the first inductance (LT).

8. Apparatus according to one of the preceding claims,
**characterized in that**

- the measuring inductance (LS) is magnetically coupled to the first inductance (LT).

9. Apparatus according to one of the preceding claims,
**characterized in that**

- the optimum Q factor is limited by connecting a resistor in the parallel resonant circuit (P).

10. Apparatus according to one of the preceding claims,
**characterized in that** the measurement variable is sensed

- by changing a position of a magnetic core in the measuring inductance (LS),
- by changing a distance between the measuring inductance (LS) and the first inductance (LT), and/or
- by changing a position of a

  - magnetic and conductive,
  - non-magnetic and conductive, or
  - magnetic and non-conductive

element adjacent to the measuring inductance (LS) and the first inductance (LT).

11. Apparatus according to one of the preceding claims,
**characterized in that**

- the measuring inductance (LS) is designed to sense a measurement variable in the form of a position, a length, an angle, a force, a pressure and/or a torque.

12. Apparatus according to one of the preceding claims,
**characterized in that**

- the measuring circuit (MS) is designed to measure one or more of the following characteristic values using the measuring inductance (LS):
- self-inductance or inductance,

- loss resistance,
- complex impedance,
- loss angle,
- mutual inductance with respect to the first inductance.

**13.** Apparatus according to one of the preceding claims, **characterized in that**

- the apparatus has two, three or more than three measuring inductances (LS).

**14.** Apparatus according to one of the preceding claims, **characterized in that**

- the apparatus has a first measuring inductance (LS) and a second measuring inductance (LS), wherein the first measuring inductance (LS) is arranged at a first longitudinal end of the first inductance (LT) and the second measuring inductance (LS) is arranged at a second longitudinal end of the first inductance (LT) .


**Revendications**

**1.** Dispositif de mesure d'une grandeur de mesure, comprenant

- une première inductance (LT),
- une inductance de mesure (LS) qui est configurée pour détecter la grandeur de mesure et qui est couplée avec la première inductance (LT),
- un condensateur (CT), qui est connecté à la première inductance (LT) en un circuit oscillant parallèle (P), la première inductance (LT) et le condensateur (CT) possédant respectivement une tolérance prédéfinie et possédant ainsi un écart maximal à attendre par rapport à la valeur nominale respective,
- un circuit d'excitation (V_St) qui est configuré pour exciter le circuit oscillant parallèle (P) en oscillation avec une fréquence d'excitation, et
- un circuit de mesure (MS) qui est au moins relié à l'inductance de mesure (LS) pour mesurer une valeur indiquant la grandeur de mesure, **caractérisé en ce que** le circuit oscillant parallèle (P) possède une qualité optimale qui est obtenue par une maximisation d'une valeur de Vt * Vt / V0,
- Vt désignant un rapport entre le courant de bobine et le courant d'amenée avec l'écart maximal à attendre du condensateur (CT) et de la première inductance (LT) par rapport à leurs valeurs nominales respectives à la fréquence de résonance du circuit oscillant parallèle (P), et
- V0 désignant un rapport entre le courant de bobine et le courant d'amenée avec les valeurs respectives du condensateur (CT) et de la première inductance (LT) à la fréquence de résonance donnée effective du circuit oscillant parallèle (P).

**2.** Dispositif selon la revendication 1, **caractérisé en ce que**

- la fréquence de résonance diffère au maximum de 25 %, de préférence au maximum de 20 %, de préférence au maximum de 15 %, encore de préférence au maximum de 10 % d'une fréquence de résonance du circuit oscillant parallèle (P).

**3.** Dispositif selon l'une des revendications précédentes, **caractérisé en ce que**

- la fréquence de résonance est réglable, notamment commandée par un élément à fréquence variable.

**4.** Dispositif selon l'une des revendications précédentes, **caractérisé en ce que**

- le circuit d'excitation (V_St) est configuré pour acheminer la fréquence d'excitation au circuit de mesure (MS) .

**5.** Dispositif selon l'une des revendications précédentes, **caractérisé en ce que**

- le circuit de mesure (MS) est réalisé sous la forme d'un amplificateur à verrouillage.

**6.** Dispositif selon l'une des revendications précédentes, **caractérisé en ce que**

- la première inductance (LT), l'inductance de mesure (LS) et/ou le condensateur (CT) sont des composants ayant une tolérance respective comprise entre 1 % et 10 %, de préférence de 1 % ou inférieure à 1 %.

7. Dispositif selon l'une des revendications précédentes, **caractérisé en ce que**

- l'inductance de mesure (LS) est couplée galvaniquement avec la première inductance (LT).

8. Dispositif selon l'une des revendications précédentes, **caractérisé en ce que**

- l'inductance de mesure (LS) est couplée magnétiquement avec la première inductance (LT).

9. Dispositif selon l'une des revendications précédentes, **caractérisé en ce que**

- la qualité optimale est limitée par connexion d'une résistance dans le circuit oscillant parallèle (P).

10. Dispositif selon l'une des revendications précédentes, **caractérisé en ce que** la grandeur de mesure est détectée

- par modification d'une position d'un noyau magnétique dans l'inductance de mesure (LS),
- par modification d'un écart entre l'inductance de mesure (LS) et la première inductance (LT) et/ou
- par modification d'une position d'un élément

- magnétique et conducteur,
- amagnétique et conducteur, ou
- magnétique et non conducteur

voisin de l'inductance de mesure (LS) et de la première inductance (LT).

11. Dispositif selon l'une des revendications précédentes, **caractérisé en ce que**

- l'inductance de mesure (LS) est configurée pour détecter une grandeur de mesure sous la forme d'une position, d'une longueur, d'un angle, d'une force, d'une pression et/ou d'un couple.

12. Dispositif selon l'une des revendications précédentes, **caractérisé en ce que**

- le circuit de mesure (MS) est configuré pour mesurer une ou plusieurs des valeurs caractéristiques suivantes par le biais de l'inductance de mesure (LS) :
- auto-inductance ou inductance,
- résistance ohmique,
- impédance complexe,
- angle de pertes,
- inductance mutuelle par rapport à la première inductance.

13. Dispositif selon l'une des revendications précédentes, **caractérisé en ce que**

- le dispositif possède deux, trois ou plus de trois inductances de mesure (LS).

14. Dispositif selon l'une des revendications précédentes, **caractérisé en ce que**

- le dispositif possède une première inductance de mesure (LS) et une deuxième inductance de mesure (LS), la première inductance de mesure (LS) étant disposée au niveau d'une première extrémité longitudinale de la première inductance (LT) et la deuxième inductance de mesure (LS) étant disposée au niveau d'une deuxième extrémité longitudinale de la première inductance (LT).

**Fig. 1**

P

V_St

CT

LT

LS

MS

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19710591

- US 2409876 A